# EUROPÄISCHE PATENTSCHRIFT

(11) **EP 1 247 320 B1**
(45) Veröffentlichungstag und Bekanntmachung des Hinweises auf die Patenterteilung: **16.06.2004**
(21) Anmeldenummer: 00993465.4
(22) Anmeldetag: 12.12.2000
(51) Int. Cl.: H02J 7/00

(54) **BATTERIELADEGERÄT**
BATTERY CHARGING DEVICE
CHARGEUR DE BATTERIE

(30) Priorität: 17.12.1999 DE 19960955
(43) Veröffentlichungstag der Anmeldung: 09.10.2002
(73) Patentinhaber: ROBERT BOSCH GMBH, 70442 Stuttgart (DE)
(72) Erfinder: ZAUNER, Friedrich, 73107 Eschenbach (DE)
(86) Internationale Anmeldenummer: PCT/DE2000/004433
(87) Internationale Veröffentlichungsnummer: WO 2001/045228

(56) Entgegenhaltungen:
- EP-A- 0 704 954
- WO-A-98/44614
- DE-A- 3 526 045
- US-A- 4 320 333
- PATENT ABSTRACTS OF JAPAN vol. 013, no. 192 (E [753], 9. Mai 1989 (1989-05-09) & JP 01 012825 A (NEC CORP.), 17. Januar 1989 (1989-01-17)
- PATENT ABSTRACTS OF JAPAN vol. 017, no. 213 (E-1356), 26. April 1993 (1993-04-26) & JP 04 351428 A (MATSUSHITA ELECTRIC WORKS), 7. Dezember 1992 (1992-12-07)

## Beschreibung

Die Erfindung betrifft ein Batterieladegerät, wie es beispielsweise aus der Fachzeitschrift "ELVjournal", Heft 4/98, Seiten 81-83 bekannt geworden ist. Das vorbekannte Batterieladegerät weist eine Tastatur auf zum Vorgeben von verschiedenen Ladeprogrammen und zum Eingeben von Batteriedaten, wie beispielsweise Nennkapazität oder Nennspannung. Anhand der eingegebenen Nennkapazität wird der Ladestrom ausgewählt. Neben der Ladung von Nickel-Cadmium-Batterien eignet sich das vorbekannte Ladegerät auch zur Ladung von Blei-Säure-Batterien, die nach dem Konstant-Spannungsverfahren mit Strombegrenzung geladen werden. Hierbei wird die maximal zulässige Batteriespannung auf einen vorgegebenen Wert begrenzt und der Ladestrom anhand der eingegebenen Batteriedaten festgelegt. Bis zum Erreichen der maximal zulässigen Ladespannung wird der Ladestrom auf den festgelegten Wert geregelt oder gesteuert. Beim Erreichen der maximal zulässigen Ladespannung wird dagegen auf die maximal zulässige Ladespannung gesteuert oder geregelt, wobei sich der Ladestrom reduziert.

WO 9844614 A offenbart ein Batterieladegerät mit den Merkmalen des Oberbegriffs von Anspruch 1 und ein Verfahren zum Laden einer Batterie mit den Merkmalen des Oberbegriffs von Anspruch 9.

Das Batterieladegerät gemäß Anspruch 1 und das Verfahren gemäß Anspruch 9 weisen den Vorteil auf, eine Überladung der Batterie weitgehend zu vermeiden, wobei der Ladevorgang spätestens dann beendet wird, wenn die eingebrachte Ladung der eingegebenen Nennkapazität der zu ladenden Batterie entspricht. Erreicht die zu ladende Batterie während des Ladevorgangs nicht die erwartete Ladespannung und wird die Ladespannung als Kriterium zum Reduzieren des Ladestroms herangezogen, so wäre eine ordnungsgemäße Beendigung des Ladevorgangs nicht möglich. Das erfindungsgemäße Batterieladegerät beendet in diesen Fällen den Ladevorgang auch dann, wenn eine Batterie eine oder mehrere defekte Zellen aufweist.

Die maximal zulässige Ladespannung hängt von mehreren Einflußgrößen ab wie beispielsweise der Temperatur und der Vorgeschichte der Batterie, so daß die Festlegung der maximal zulässigen Ladespannung nur ein Schätzwert sein kann. Das erfindungsgemäße Batterieladegerät ermöglicht die Festlegung einer vergleichsweisen hohen zulässigen maximalen Ladespannung, da der Ladevorgang in jedem Fall nach dem Erreichen einer der Nennkapazität entsprechenden Ladungsmenge beendet wird.

Eine Begrenzung auf eine vorgegebene maximal zulässige Ladespannung wird zumindest kurzzeitig aufgehoben, um die sich bei einem vorgegebenen Ladestrom einstellende Ladespannung messen zu können. Ein vergleicher vergleicht die Ladespannung mit einer vorgegebenen Grenzspannung und erzeugt gegebenenfalls ein Abschaltsignal, das den Ladevorgang ebenfalls beendet.

Vorteilhafte Ausgestaltungen und Weiterbildungen des erfindungsgemäßen Batterieladegeräts bzw. des Verfahrens zum Laden von Batterien ergeben sich aus abhängigen Ansprüchen.

Eine erste vorteilhafte Ausgestaltung sieht die Festlegung des Ladestroms in Abhängigkeit von der eingegebenen Kapazität vor. Mit dieser Maßnahme eine Anpassung des Ladestroms an die Größe der Batterie sichergestellt. Die zulässigen Ladeströme werden von den Batterieherstellern angegeben und können entsprechend ausgewählt werden.

Eine andere vorteilhafte Ausgestaltung sieht die Festlegung des Ladestroms in Abhängigkeit von einem vorgegebenen Ladeprogramm vor. Mit dieser Maßnahme ist beispielsweise ein Normalladen, ein beschleunigtes Laden oder ein Schnelladen durch eine entsprechende Festlegung des Ladestroms vorgebbar. Besonders vorteilhaft ist eine Kombination des Ladeprogramms mit der eingegebenen Nennkapazität, um stets innerhalb der zulässigen Ladeströme zu bleiben.

Eine Weiterbildung des erfindungsgemäßen Batterieladegeräts sieht die Vorgabe einer maximal zulässigen Ladespannung vor. Mit dieser Maßnahme wird ein Schutz der Batterie erreicht. Bei einer Bleibatterie oder Bleigelbatterie wird durch die Vorgabe der maximal zulässigen Ladespannung ein Gasen in der Batterie vermieden oder zumindestens in einem unschädlichen Rahmen gehalten.

Eine besonders vorteilhafte Weiterbildung im Rahmen der Vorgabe der maximal zulässigen Ladespannung sieht vor, daß die maximal zulässige Spannung in Abhängigkeit von dem vorgegebenen Ladeprogramm festgelegt wird. Bei einer vorgegebenen Schnelladung kann die maximal zulässige Ladespannung erhöht werden, um den höheren Ladestrom fließen lassen zu können.

Eine vorteilhafte Weiterbildung des erfindungsgemäßen Ladegeräts sieht eine Erfassungsvorrichtung zum Ermitteln der Ladespannung vor.

Weitere vorteilhafte Weiterbildungen und Ausgestaltungen des erfindungsgemäßen Batterieladegeräts ergeben sich aus weiteren abhängigen Ansprüchen und aus der folgenden Beschreibung.

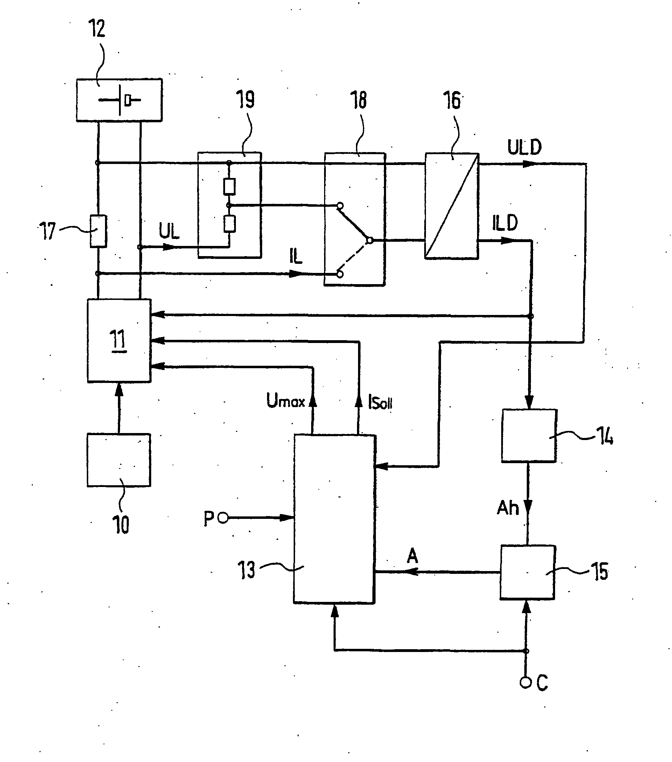

In der Figur ist ein Blockschaltbild eines erfindungsgemäßen Batterieladegeräts gezeigt.

Eine Energiequelle 10 ist über einen Laderegler 11 mit einer zu ladenden Batterie 12 verbunden. Der Laderegler legt den Ladestrom in Abhängigkeit von einem Ladestrom-Sollwert ISoll und die Spannung in Abhängigkeit von einer maximal zulässigen Ladespannung Umax fest. Der Ladestrom-Sollwert ISoll und die maximal zulässige Ladespannung Umax stellt eine Ladesteuerung 13 bereit. Die Ladesteuerung 13 erhält Signale von einer Programmvorgabe P und von einer Kapazitätsvorgabe C. Eine Ladungsermittlung 14 ermittelt aus einem digitalen Ladestrom-Istwert ILD, die in die Batterie 12 während des Ladevorgangs eingespeicherte Ladungsmenge Ah und gibt sie an einen Ladungsvergleicher 15 ab, der die Ladungsmenge Ah mit der über die Kapazitätsvorgabe C vorgegebenen Nennkapazität der Batterie 12 vergleicht. Der Ladungsvergleicher 15 gibt an die Ladungssteuerung 13 ein erstes Abschaltsignal A ab.

Der Ladungsteuerung 13 ist ferner ein digitaler Ladespannungs-Istwert ULD zugeleitet, den ein A/D-Wandler 16 neben dem digitalen Ladestrom-Istwert ILD bereitstellt. Der digitale Ladestrom-Istwert ILD wird neben der Ladungsermittlung noch dem Laderegler 11 zur Verfügung gestellt. Der A/D-Wandler 16 ermittelt den digitalen Ladespannungs-Istwert ULD sowie den digitalen Ladestrom-Istwert ILD aus dem (analogen) Ladespannungs-Istwert UL bzw. aus dem (analogen) Ladestrom-Istwert IL.

Der Ladestrom-Istwert IL wird als Spannungsabfall erfaßt, der an einem Shunt 17 auftritt. Der Shunt 17 ist mit einem Demultiplexer 18 verbunden, der entweder den Ladesstrom-Istwert IL oder den Ladespannungs-Istwert UL an den A/D-Wandler 16 weiterleitet. Der Ladespannungs-Istwert UL wird von einem Spannungsteiler 19 reduziert und über den Demultiplexer 18 dem A/D-Wandler zur Verfügung gestellt.

Das erfindungsgemäße Batterieladegerät arbeitet folgendermaßen:

Zunächst ist über die Kapazitätsvorgabe C die Nennkapazität der zu ladenden Batterie 12 einzugeben. Im gezeigten Ausführungsbeispiel wird angenommen, daß die Batterie 12 eine Blei-Säure-Batterien ist. Eine geeignete Lademethode, die im Laderegler 11 vorzugeben ist, sieht vor, daß die Batterie 12 zunächst mit einem vorgegebenen Strom Isoll bis zum Erreichen der maximal zulässigen Ladespannung Umax geladen wird, gefolgt von einem Konstantspannungsbetrieb, bei dem die Spannung vorzugeben ist, die niedriger oder höchstens gleich der maximal zulässigen Ladespannung Umax ist. In Abhängigkeit von der eingegebenen Nennkapazität der Batterie 12 legt die Ladesteuerung 13 den Ladestrom-Sollwert ISoll fest, den der Laderegler 11 einstellen soll. Bei bekannter Nennspannung der Batterie 12, beispielsweise 12 Volt, gibt die Ladesteuerung 13, abgestimmt auf den Ladestrom-Sollwert Isoll, gleichfalls die maximal zulässige Ladespannung Umax vor. Die maximal zulässige Ladespannung Umax kann wegen der unvermeidlichen Leitungswiderstände und wegen des höheren Spannungsabfalls am Innenwiderstand der Batterie 12 bei einem höheren Ladestrom-Sollwert ISoll höher festgelegt werden als bei niedrigerem Ladestrom-Sollwert Isoll.

Vorteilhafterweise ist die Programmvorgabe P vorgesehen, die eine Auswahl eines Ladeprogramms ermöglicht. Neben hier nicht näher beschriebenen Entladungs- oder Batteriewartungsprogrammen, kann insbesondere die Ladezeit beeinflußt werden. Beispielsweise kann ein Ladeprogramm im Rahmen eines normalen Ladens, eines beschleunigten Ladens oder eines Schnellladens vorgegeben werden. Die Ladesteuerung 13 legt den Ladestrom-Sollwert ISoll daher zusätzlich in Abhängigkeit von der Programmvorgabe P fest und ändert gegebenenfalls entsprechend die maximal zulässige Ladespannung Umax.

Das erfindungsmäße Batterieladegerät sieht insbesondere die Erfassung des Ladestrom-Istwerts IL vor, der in dem gezeigten Ausfführungsbeispiel als Spannungsabfall am Shunt 17 erfaßt wird. Im Hinblick auf einen hohen Wirkungsgrad sollte darauf geachtet werden, daß der Shunt 17 nur einen kleinen Widerstand aufweist, so daß der Spannungsabfall ebenfalls nur gering ist. Der Spannungsteiler 19 reduziert den Ladespannungs-Istwert UL, um wenigstens näherungsweise auf dieselbe Größenordnung zu kommen, wie der Spannungsabfall am Shunt 17. Der wesentliche Vorteil dieser Maßnahme liegt darin, daß der A/D-Wandler für beide Eingangsgrößen auf denselben Wandlungsbereich abgestellt werden kann. Der Demultiplexer 18 sorgt dafür, daß in vorgebbarer zeitlicher Folge entweder der Ladestrom-Istwert IL oder der Ladespannungs-Istwert UL an den A/D-Wandler 16 gelegt wird.

Der A/D-Wandler 16 stellt den digitalen Ladestrom-Istwert ILD zur Verfügung, der einerseits dem Laderegler 11 als Istwert für eine gegebenenfalls vorgesehene Stromregelung und andererseits der Ladeermittlung 14 zugeleitet ist. Die Ladungsermittlung 14 führt eine Integration über der Zeit durch und stellt als Ausgangssignal ein Maß für die während des Ladevorganges in der Batterie 12 eingespeicherten Ladungsmenge Ah zur Verfügung. Aufgrund des digital vorliegenden Ladestrom-Istwerts ILD kann die Ladeermittlung 14 in einfacher Weise mittels eines Zählers realisiert werden.

Die ermittelte Ladungsmenge Ah wird im Ladungsvergleicher 15 mit der von der Kapazitätsvorgabe C eingegebenen Nennkapazität der Batterie 12 verglichen. Erreicht die eingespeicherte Ladungsmenge Ah die Nennkapazität, so gibt der Ladungsvergleicher 15 das erste Abschaltssignal A an die Ladesteuerung 13 ab, die den Ladevorgang beendet. Mit dieser Maßnahme ist sichergestellt, daß der Ladevorgang spätestens beim Erreichen einer Ladungsmenge Ah, die der eingegebenen Nennkapazität der Batterie 12 entspricht, beendet wird. Das erste Abschaltsignal A führt zum Beenden des Ladevorgangs unabhängig davon, welchen Ladesstrom-Sollwert ISoll oder welche maximal zulässige Ladespannung Umax die Ladesteuerung 13 dem Laderegler 11 vorgibt. Beispielsweise würde bei einer Batterie 12, bei der zumindest eine Zellenspannung unter dem üblichen Wert liegt, die maximal zulässige Ladespannung nicht erreichen werden, mit der Folge, daß der Ladevorgang mit dem vollen Ladestrom beliebig lange fortgesetzt würde mit der Folge, daß intakte Zellen der Batterie 12 erheblich überladen würden.

Das erste Abschaltsignal A beendet auch in dem Fall den Ladevorgang, bei dem die maximal zulässige Ladespannung Umax erreicht ist und infolgedessen der Ladestrom IL sich auf Werte reduziert, die vom Innenwiderstand des am Laderegler 11 angeschlossenen Batteriekreises abhängen. In diesen Betriebszustand kann der Ladestrom-Sollwert nicht mehr aufrechterhalten werden, da sich der Strom nicht mehr einprägen läßt. Die Ladung wird solange fortgesetzt, bis bei dem reduzierten Ladestrom IL das erste Abschaltsignal A beim Erreichen einer der Nennkapazität entsprechenden Ladungsmenge Ah den Ladevorgang beendet.

Ergänzend kann die Überwachung des Ladespannungs-Istwerts UL auf beispielsweise Plausibilität hin vorgesehen sein. Zu diesem Zweck bewertet die Ladesteuerung 13 den zur Verfügung gestellten digitalen Ladespannungs-Istwert ULD beispielsweise in Abhängigkeit von der Ladezeit. Tritt beispielsweise nach kurzer Zeit eine der maximal zulässigen Ladespannung Umax entsprechende Spannung auf, deutet dies entweder auf eine hochohmig gewordene oder auf eine bereits voll geladene Batterie 12 hin.

Die Ladesteuerung 13 erhöht zu Testzwecken die vorgegebene maximal zulässige Ladespannung Umax kurzzeitig auf nicht erreichbare Werte um bei einem vorgegebenen Ladestrom-Sollwert ISoll den sich dann an der Batterie 12 einstellenden Ladespannungs-Istwert UL zu erfassen und mit einem Grenzwert zu vergleichen. Bei einem Überschreiten des vorgegebenen Grenzwerts tritt in der Ladesteuerung 13 ein zweites Abschaltsignal auf, das ebenfalls den Ladevorgang auf Grund des Spannungskriteriums beendet.

In weiteren Ausgestaltungen des erfindungsgemäßen Batterieladegeräts kann beispielsweise eine Anzeigeeinheit vorgesehen sein zur Darstellung der beschriebenen Größen.

Das erfindungsgemäße Batterieladegerät ist insbesondere geeignet zur Ladung von Blei-Säure-Batterien. Die Ladung von anderen Batterietypen, beispielsweise von Nickel-Cadmium-Batterien ist mit einer entsprechenden Anpassung der von der Ladessteuerung 13 bereitgestellten Größen, der Ladespannung und des Ladestroms, möglich. Gegebenenfalls ist neben dem ersten und dem zweiten Abschaltsignal A ein weiteres Abschaltsignal vorzusehen, das aufgrund anderer Signalbewertungen gewonnen wird. Beispielsweise kann eine Bewertung des zeitlichen Verlaufs der Ladespannung UL durch die Ermittlung der ersten und/oder höherer Ableitungen nach der Zeit vorgesehen sein.

## Patentansprüche

1. Batterieladegerät mit einer Kapazitätseingabe ( C) zum Eingeben der Nennkapazität einer zu ladenden Batterie (12), mit einer Ladungsermittlung (14) zum Ermitteln der während des Ladens eingebrachten Ladungsmenge (Ah) und mit einem Ladungsvergleicher (15), der die ermittelte Ladungsmenge (Ah) mit der eingegebenen Kapazität vergleicht und bei Übereinstimmung ein erstes Abschaltsignal (A) erzeugt, das den Ladevorgang beendet, **dadurch gekennzeichnet, dass** eine Ladesteuerung (13) den Ladespannungs-Istwert testet, indem eine vorgesehene Begrenzung der Ladespannung auf eine vorgegebene maximal zulässige Ladespannung zumindest kurzzeitig aufgehoben wird, um bei einem vorgegebenen Ladestromsollwert den sich an der Batterie einstellenden Ladespannungsistwert (UL) zu erfassen und mit einer vorgegebenen Grenzspannung zu vergleichen und bei einem Überschreiten der Grenzspannung ein zweites Abschaltsignal zu generieren, das den Ladevorgang beendet.

2. Batterieladegerät nach Anspruch 1, **dadurch gekennzeichnet, dass** die Ladesteuerung (13) den Ladespannungsistwert (UL) auf Plausibilität hin überwacht, indem die Ladesteuerung (13) den Ladespannungsistwert in Abhän igkeit von der Ladezeit bewertet, so dass, wenn der Ladespannungsistwert die vorgegebene maximal zulässige Ladespannung bereits nach kurzer Zeit erreicht, eine hochohmig gewordene Batterie erkannt und der Ladevorgang beendet werden kann.

3. Batterieladegerät nach einem der vorhergehenden Ansprüche, bei dem ein Ladestrom-Sollwert (Isoll) in Abhängigkeit von der eingegebenen Kapazität festgelegt ist.

4. Batterieladegerät nach einem der vorhergehenden Ansprüche, bei dem der Ladestrom-Sollwert (Isoll) in Abhängigkeit von einem vorgegebenen Ladeprogramm (P) festgelegt ist.

5. Batterieladegerät nach Anspruch 4, bei dem die maximale zulässige Ladespannung (Umax) abhängt vom Ladeprogramm (P).

6. Batterieladegerät nach einem der vorhergehenden Ansprüche, bei dem der Ladestrom-Istwert (IL) als Spannungsabfall an einem Shunt (17) erfaßt ist.

7. Batterieladegerät nach einem der vorhergehenden Ansprüche, **dadurch gekennzeichnet, daß** der Ladespannungs-Istwert (UL) und der Ladestrom-Istwert (IL) über einen Demultiplexer (18) auf einen einzigen Eingang eines A/D-Wandlers (16) in zeitlicher Folge gelegt sind.

8. Batterieladegerät nach einem der vorhergehenden Ansprüche, bei dem der Ladespannungs-Istwert (UL) vor der A/D-Wandlung mit einem Spannungsteiler (19) reduziert ist.

9. Verfahren zum Laden einer Batterie, bei dem die während des Ladens eingebrachte Ladungsmenge (Ah) ermittelt und mit der Nennkapazität der zu ladenden Batterie verglichen wird, wobei bei Übereinstimmung der Ladevorgang beendet wird, **dadurch gekennzeichnet, daß** der Ladespannungs-Istwert getestet wird, indem eine vorgesehene Begrenzung der Ladespannung auf eine vorgegebene maximal zulässige Ladespannung zumindest kurzzeitig aufgehoben wird, um bei einem vorgegebenen Ladestromsollwert den sich an der Batterie einstellenden Ladespannungsistwert (UL) zu erfassen und mit einer vorgegebenen Grenzspannung zu vergleichen und bei einem Überschreiten der Grenzspannung den Ladevorgang zu beenden.

## Claims

1. Battery charging device having a capacity input (C) for inputting the rated capacity of a battery (12) to be charged, having a charge-determining device (14) for determining the amount of charge (Ah) introduced during charging, and having a charge comparator (15), which compares the determined amount of charge (Ah) with the input capacity, and produces, in the event of these values corresponding to one another, a first disconnection signal (A), which ends the charging process, **characterized in that** a charge controller (13) tests the actual value for the charging voltage by a limit provided for the charging voltage being raised at least temporarily to a predetermined, maximum permissible charging voltage, in order to detect, at a predetermined desired value for the charging current, the actual value (UL) for the charging voltage prevailing in the battery, and to compare this with a predetermined limit voltage, and to generate a second disconnection signal, which ends the charging process when the limit voltage is exceeded.

2. Battery charging device according to Claim 1, **characterized in that** the charge controller (13) monitors the actual value (UL) for the charging voltage for plausibility by the charge controller (13) evaluating the actual value for the charging voltage as a function of the charge time, so that, when the actual value for the charging voltage reaches the predetermined, maximum permissible charging voltage even after only a short period of time, a battery which has become highly resistive can be detected, and the charging process can be ended.

3. Battery charging device according to one of the preceding claims, in which a desired value (Ides) for the charging current is determined as a function of the input capacity.

4. Battery charging device according to one of the preceding claims, in which the desired value (Ides) for the charging current is determined as a function of a predetermined charging programme (P).

5. Battery charging device according to Claim 4, in which the maximum permissible charging voltage (Umax) depends on the charging programme (P).

6. Battery charging device according to one of the preceding claims, in which the actual value (IL) for the charging current is detected as a voltage drop across a shunt (17).

7. Battery charging device according to one of the preceding claims, **characterized in that** the actual value (UL) for the charging voltage and the actual value (IL) for the charging current are supplied successively, via a demultiplexer (18), to a single input of an A/D converter (16).

8. Battery charging device according to one of the preceding claims, in which, prior to A/D conversion, the actual value (UL) for the charging voltage is reduced by a voltage divider (19).

9. Method for charging a battery, in which the amount of charge (Ah) introduced during charging is determined and compared with the rated capacity of the battery to be charged, the charging process being ended when these values correspond to one another, **characterized in that** the actual value for the charging voltage is tested by a limit provided for the charging voltage being raised at least temporarily to a predetermined, maximum permissible charging voltage, in order to detect, at a predetermined desired value for the charging current, the actual value (UL) for the charging voltage prevailing in the battery, and to compare this with a predetermined limit voltage, and to end the charging process when the limit voltage is exceeded.

## Revendications

1. Chargeur de batterie comportant une entrée de capacité (C) destinée à entrer une capacité nominale d'une batterie (12) à charger, un détecteur de charge (14) destiné à détecter la quantité de charge (Ah) introduite pendant la charge et un comparateur de charge (15) qui compare la quantité de charge (Ah) détectée avec la capacité entrée et qui en cas de correspondance produit un premier signal de déconnexion (A) terminant l'opération de charge,
**caractérisé en ce qu'**
un régulateur de charge (13) teste la valeur effective de l'opération de charge du fait qu'une limitation prévue de la tension de charge est au moins temporairement augmentée vers une tension de charge maximale autorisée et prédéfinie pour enregistrer la valeur effective de tension de charge (UL) qui s'établit sur la batterie dans le cas d'une valeur théorique prédéterminée de courant de charge, pour la comparer à une tension limite prédéterminée et pour générer un deuxième signal de déconnexion qui termine l'opération de charge lorsque la tension limite est dépassée.

2. Chargeur de batterie selon la revendication 1,
**caractérisé en ce que**
le régulateur de charge (13) surveille la vraisemblance de la valeur effective de tension de charge (UL) du fait que le régulateur de charge (13) évalue la valeur effective de tension de charge en fonction de la durée de la charge de sorte que, lorsque la valeur effective de tension de charge atteint déjà la tension de charge maximale autorisée prédéterminée après une brève durée, on reconnaît une batterie dont la valeur ohmique est devenue élevée et l'opération de charge peut se terminer.

3. Chargeur de batterie selon l'une des revendications précédentes,
pour lequel
une valeur théorique de courant de charge (Isoll) est déterminée en fonction de la capacité entrée.

4. Chargeur de batterie selon l'une des revendications précédentes,
pour lequel
la valeur théorique de courant de charge (Isoll) est déterminée en fonction d'un programme de charge (P) prédéterminé.

5. Chargeur de batterie selon la revendication 4,
pour lequel
la tension de charge (Umax) maximale autorisée dépend du programme de charge (P).

6. Chargeur de batterie selon l'une des revendications précédentes,
pour lequel
la valeur effective de courant de charge (IL) est détectée sous forme de chute de tension sur un shunt (17).

7. Chargeur de batterie selon l'une des revendications précédentes,
**caractérisé en ce que**
la valeur effective de tension de charge (UL) et la valeur effective de courant de charge (IL) sont appliquées selon une séquence chronologique sur une unique entrée d'un convertisseur analogique/numérique (16) par l'intermédiaire d'un démultiplexeur (18).

8. Chargeur de batterie selon l'une des revendications précédentes,
pour lequel
la valeur effective de tension de charge (UL) est réduite en amont de la conversion analogique/numérique à l'aide d'un diviseur de tension (19).

9. Procédé pour charger une batterie, selon lequel la quantité de charge (Ah) introduite pendant la charge est détectée puis comparée avec la capacité nominale de la batterie à charger, l'opération de charge étant terminée en cas de correspondance,
**caractérisé en ce que**
la valeur effective de tension de charge est testée du fait qu'une limitation prévue de la tension de charge est au moins temporairement augmentée vers une tension de charge maximale autorisée prédéfinie pour enregistrer la valeur effective de tension de charge (UL) qui s'établit sur la batterie dans le cas d'une valeur théorique prédéterminée de courant de charge, pour la comparer avec une tension limite prédéterminée et pour terminer l'opération de charge lorsque la tension limite est dépassée.
